# EUROPÄISCHE PATENTSCHRIFT

(11) **EP 0 657 682 B1**
(45) Veröffentlichungstag und Bekanntmachung des Hinweises auf die Patenterteilung: **31.10.2001**
(21) Anmeldenummer: 94114657.3
(22) Anmeldetag: 17.09.1994
(51) Int. Cl.: F16L 47/00, F16L 41/02, F16L 41/08, F16L 55/07

(54) **Befestigungselement**
Fastening device
Elément de fixation

(30) Priorität: 10.12.1993 DE 9318988 U
(43) Veröffentlichungstag der Anmeldung: 14.06.1995
(73) Patentinhaber: FILTERWERK MANN & HUMMEL GMBH, 71638 Ludwigsburg (DE)
(72) Erfinder: Mössinger, Klaus, D-74182 Obersulm (DE)
(74) Vertreter: Voth, Gerhard, Dipl.-Ing.

(56) Entgegenhaltungen:
- FR-A- 1 411 607
- FR-A- 2 495 274
- US-A- 3 565 466
- US-A- 4 622 703
- US-A- 5 326 139

## Beschreibung

Die Erfindung betrifft ein gummielastisches Rohr nach dem unabhängigen Anspruch 1.

Aus dem Stand der Technik sind verschiedene Arten von Befestigungen an gummielastischen Teilen bekannt. Die allgemeine Art der Befestigung besteht darin, daß ein Teil an einem gummielastischen Element anvulkanisiert wird. Diese sehr zuverlässige Befestigungsart ist jedoch in der Herstellung recht aufwendig und kostenintensiv. Andere Befestigungselemente sind z.B. einfache Schraubverbindungen, die jedoch nicht ausreißsicher sind.

Aus der FR-A-2495274 ist ein Befestigungselement bekannt, welches über eine Schraubverbindung mit einem Rohr verbunden ist. An dem Befestigungselement ist ein kegelförmiger Ansatz vorgesehen, dieser wirkt in Verbindung mit einer Schraube als Einführhilfe für dieses in die Öffnung des Rohres. Zum zuverlässigen Verbinden zwischen den beiden Bauteilen ist ein zusätzliches Abdichtelement sowie eine Kontermutter erforderlich.

Der Erfindung liegt die Aufgabe zugrunde, ein gummielastisches Rohr mit einem Befestigungselement zu schaffen, welches zum einen kostengünstig ist und zum anderen eine Befestigung beliebiger Bauteile an dem gummielastischen Rohr ermöglicht. Diese Aufgabe wird durch die Merkmale des Hauptanspruchs gelöst.

Der Vorteil der Erfindung liegt in der speziellen konstruktiven Ausgestaltung des Befestigungselements. Insbesondere die Kombination eines konzentrischen Befestigungselements mit einem Abschlußflansch und einem gegenüberliegend angeordneten Gewindeanschluß sorgt für eine zuverlässige Befestigung beliebiger Bau- bzw. Anschlußteile.

Gemäß der Erfindung erweitert sich der konzentrische Bereich des Befestigungselements, ausgehend von dem Gewindeanschluß, kegelförmig bis auf einen bestimmten Durchmesser. Diese Form hat den Vorteil, daß eine einfache Montage des Befestigungselements in gummielastischen Rohr möglich ist und gleichzeitig eine Sicherung gegen Herausdrücken darstellt.

Eine Ausgestaltung der Erfindung sieht vor, das Befestigungselement mit einer Durchgangsbohrung zu versehen. Damit besteht die Möglichkeit, einen einfachen Abzweig aus einem Rohr zu schaffen, um Flüssigkeiten oder Gas abzuleiten bzw. zuzuführen.

Eine weitere Ausgestaltung der Erfindung ist eine Verdrehsicherung, die in Form von Rippen oder Nuten auf dem Befestigungselement angebracht ist.

Das Element kann bevorzugt angewendet werden um eine Unterdruckanzeige-Einrichtung an dem reinluftseitigen Anschluß eines Luftfilters für eine Brennkraftmaschine zu befestigen.

Diese und weitere Merkmale von bevorzugten Weiterbildungen der Erfindung gehen außer aus den Ansprüche auch aus der Beschreibung und den Zeichnungen hervor.

Die Erfindung wird nachfolgend anhand eines Ausführungsbeispiels näher erläutert. Es zeigt:
Figur 1 ein in einem gummielastischen Rohr angeordnetes Befestigungselement
Figur 2 eine Differenzdruckanzeige-Einrichtung an dem Reinluftkanal eines Luftfilters.

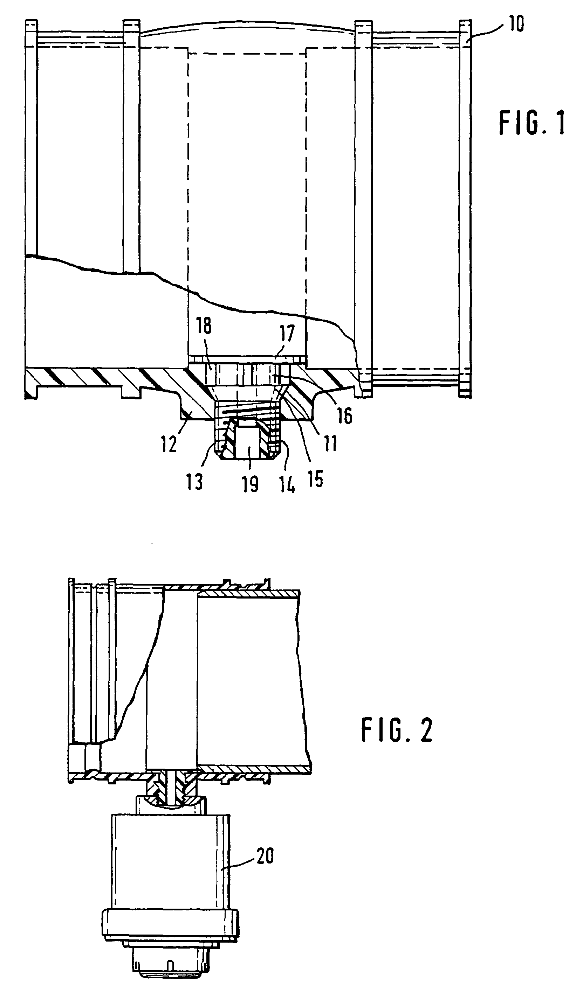

Die Figur 1 zeigt ein gummielastisches Rohr 10, welches hier als Verbindungsstück ausgebildet ist, d.h. auf beiden Seiten über Anschlußstutzen gesteckt und dort mit geeignetenElementen, wie z.B. Rohrschellen, befestigt wird. Dieses gummielastische Rohr weist eine Öffnung 11 auf. Diese Öffnung 11 ist durch einen Ansatz 12 verstärkt. In der Öffnung 11 ist ein Befestigungselement 13 welches aus Kunststoff hergestellt ist angeordnet. Dieses trägt ein Außengewinde 14 und weist einen konischen Übergang 15 zu einem zylindrischen Bereich 16 auf. An den zylindrischen Bereich 16 schließt sich ein Flanschbereich 17 an. Der zylindrische Bereich 16 weist axial verlaufende Rippen 18 auf. Diese Rippen bilden in der Bohrung 11 Verdrehsicherungen. Das Befestigungselement ist ferner mit einer Durchgangsbohrung 19 versehen.

Wie in Figur 2 gezeigt, wird ein and das Befestigungselement anzuordnendes Bauteil, in diesem Fall ein Differenzdruckanzeiger 20, unmittelbar auf das Gewinde 14 angeschraubt. Dieses Bauteil 20 liegt an der Verstärkung 12 bzw. der Schulter des gummielastischen Rohres 10 an, so dass keine zusätzlichen Elemente zur Sicherung des Befestigungselements erforderlich sind.

Bei der Montage wird das Befestigungselement 13 von innen durch die Bohrung 11 des gummielastischen Rohrs 10 gesteckt und das Bauteil 20 von außen aufgeschraubt.

Das Bauteil 20 kann auch direkt am Konus des Befestigungselements angeordnet sein. Der Vorteil hierbei liegt darin, dass ein Lösendes Anbauteils auch beim Setzen der Verstärkung des gummielastischen Rohres nicht möglich ist, da das Anbauteil kraftschlüssig mit dem Befestigungselement verbunden ist.

## Patentansprüche

1. Gummielastisches Rohr mit einem Befestigungselement zum Befestigen eines Bauteils wobei das Befestigungselement eine im wesentlichen konzentrische Form aufweist und ein Abschlußflansch ein Ende desselben bildet und das gegenüberliegende Ende mit einem Gewindeanschluß versehen ist, wobei das gummielastische Rohr eine Öffnung (11) aufweist und diese Öffnung (11) durch einen Ansatz (12) verstärkt ist und das Befestigungselement in die Öffnung des gummielastischen Rohres eingesetzt ist und wobei die konzentrische Form sich ausgehend von dem Gewindeanschluß zu dem Abschlußflansch hin kegelförmig erweitert.

2. Befestigungselement nach Anspruch 1, **dadurch gekennzeichnet, daß** es eine Durchgangsbohrung aufweist.

3. Befestigungselement nach einem der vorhergehenden Ansprüche, **dadurch gekennzeichnet, daß** die mit dem gummielastischen Formteil in Kontakt tretende Fläche mit Rippen oder Nuten versehen ist.

4. Befestigungselement nach einem der vorhergehenden Ansprüche, **gekennzeichnet** zur Befestigung eines Unterdruckanzeigers an dem gummielastischen Formteil.

## Claims

1. Resilient tube having a securing means for securing a structural member, wherein the securing means is of substantially concentric shape, and an end flange forms one end thereof, and the oppositely situated end is provided with a threaded connection, wherein the resilient tube has an opening (11), and this opening (11) is reinforced by an extension member (12), and the securing means is inserted into the opening of the resilient tube, and wherein the concentric shape widens conically from the threaded connection to the end flange.

2. Securing means according to claim 1, **characterised in that** it has a through-bore.

3. Securing means according to one of the preceding claims, **characterised in that** the face, which comes into contact with the resilient shaped part, is provided with ribs or grooves.

4. Securing means according to one of the preceding claims, **characterised** for securing a reduced-pressure indicator on the resilient shaped part.

## Revendications

1. Tube élastique en caoutchouc comportant un élément de fixation pour fixer une pièce, l'élément de fixation ayant une forme essentiellement concentrique et une bride de fermeture qui en constitue l'extrémité, et dont l'extrémité opposée est munie d'un branchement fileté,
le tube élastique en caoutchouc comportant une ouverture (11) renforcée par un prolongement (12), l'élément de fixation étant placé dans l'ouverture du tube élastique en caoutchouc, et la forme concentrique s'élargissant à partir du branchement fileté jusqu'à la bride de fermeture suivant une forme conique.

2. Elément de fixation selon la revendication 1,
**caractérisé en ce qu'**
il comporte un perçage traversant.

3. Elément de fixation selon l'une quelconque des revendications précédentes,
**caractérisé en ce que**
la surface qui vient en contact avec la pièce moulée élastique en caoutchouc comporte des nervures ou des rainures.

4. Elément de fixation selon l'une quelconque des revendications précédentes,
**caractérisé en ce qu'**
il est destiné à fixer un indicateur de dépression sur une pièce moulée élastique en caoutchouc.
